# EUROPÄISCHE PATENTSCHRIFT

(11) **EP 1 998 498 B1**
(45) Veröffentlichungstag und Bekanntmachung des Hinweises auf die Patenterteilung: **03.01.2018**
(21) Anmeldenummer: 07010536.6
(22) Anmeldetag: 26.05.2007
(51) Int. Cl.: H04L 12/861, H04L 12/26, H04L 12/40, H04L 12/403

(54) **Testvorrichtung und Testverfahren**
Test device and test method
Dispositif de test et procédé de test

(43) Veröffentlichungstag der Anmeldung: 03.12.2008
(73) Patentinhaber: Vector Informatik GmbH, 70499 Stuttgart (DE)
(72) Erfinder: Augustin, Olav, 70499 Stuttgart (DE); Braun, Jochen, 72768 Reutlingen (DE); Fischer, Markus, 70499 Stuttgart (DE); Gossner, Martin, 71282 Hemmingen (DE)
(74) Vertreter: Patentanwälte Bregenzer und Reule Partnerschaftsgesellschaft mbB

(56) Entgegenhaltungen:
- EP-A- 1 085 722
- EP-A- 1 624 620
- WO-A1-2006/079651
- US-A1- 2007 032 916
- TECHMER A ET AL: "Implementing FlexRay on Silicon" NETWORKING, INTERNATIONAL CONFERENCE ON SYSTEMS AND INTERNATIONAL CONFERENCE ON MOBILE COMMUNICATIONS AND LEARNING TECHNOLOGIES, 2006. ICN/ICONS/MCL 2006. INTERNATIONAL CONFERENCE ON MORNE, MAURITIUS 23-29 APRIL 2006, PISCATAWAY, NJ, USA,IEEE, 23. April 2006 (2006-04-23), Seiten 34-34, XP010914566 ISBN: 0-7695-2552-0

## Beschreibung

Die Erfindung betrifft ein Testverfahren und eine Testvorrichtung für einen Kraftfahrzeug-Bus, wobei die Testvorrichtung einen Buskontroller zum Senden und Empfangen von Busnachrichten enthält, wobei der Buskontroller einen Nachrichtenspeicher zum Bereitstellen von Sendedaten für Busnachrichten aufweist, wobei der Nachrichtenspeicher eine Speicherkapazität für eine Busnachrichtensequenz mit innerhalb eines einzigen Sendezyklusses oder einer Sendezyklusfolge zu sendenden Busnachrichten aufweist.

Ein typischer Buskontroller für beispielsweise einen FlexRay-Bus, der z.B. in TECHMER A ET AL: "Implementing FlexRay on Silicon" NETWORKING, INTERNATIONAL CONFERENCE ON SYSTEMS AND INTERNATIONAL CONFERENCE ON MOBILE COMMUNICATIONS AND LEARNING TECHNOLOGIES, 2006. ICN/ICONS/MCL 2006. INTERNATIONAL CONFERENCE ON MORNE, MAURITIUS 23-29 APRIL 2006, PISCATAWAY, NJ, USA, IEEE, 23. April 2006 (2006-04-23), Seiten 34-34. XP010914566 ISBN: 0-7695-2552-0 oder in EP-A-1 624 620 A1 offenbart ist, hat eine vorbestimmte Speicherkapazität in seinem Nachrichtenspeicher, sodass Busnachrichten, die innerhalb einer Busnachrichtensequenz auf dem Kraftfahrzeug-Bus zu senden sind, in den Nachrichtenspeicher "passen". Beispielsweise hat ein Buskontroller für einen FlexRay-Bus eine solche vorbestimmte Nachrichtenkapazität von beispielsweise etwa 40 bis 70 Busnachrichten. Die in einem Sendezyklus oder in einer Folge von Sendezyklen zu sendenden Busnachrichten stehen in dem Nachrichtenspeicher bereit. Der Buskontroller kann allerdings keine zusätzlichen Busnachrichten senden als diejenigen, die in dem Nachrichtenspeicher speicherbar sind.

Die Speicherkapazität des Nachrichtenspeichers ist für typische Aufgaben eines Buskontrollers ausgelegt. Der Buskontroller bildet beispielsweise einen Bestandteil eines Steuermoduls zur Steuerung von Bremsen, des Motors oder einer sonstigen Komponente des Kraftfahrzeugs, einen Bestandteil eines Sensors oder eines Aktors. Für diese typischen Steuerungsaufgaben reicht die Speicherkapazität des Nachrichtenspeichers aus. Für Analyse- und Simulationszwecke hingegen wird eine größere Speicherkapazität benötigt.

Wenn zum Beispiel eine Testvorrichtung mehrere Steuergeräte, Aktoren und Sensoren simulieren soll, müsste sie einen Buskontroller mit beispielsweise größerer Nachrichtenspeicherkapazität aufweisen. Solche Buskontroller sind jedoch als Standard-Komponenten nicht verfügbar. Alternativ wäre es denkbar, mehrere Buskontroller zu verwenden, um auf diesem Wege die Sendekapazität zu vergrößern. Dies ist jedoch aufwendig.

Aus DE 102004005680 A1, auch veröffentlicht als US 2007/32916 A1, ist eine Vorrichtung zur Ansteuerung von Steuergeräten in einem Bordnetz eines Kraftfahrzeuges bekannt, bei der das Bordnetz ein Bussystem aufweist, das in Subnetze von Bussen mit Gruppen von Steuergeräten zur Steuerung von Betriebsabläufen unterteilt ist und bei der die Steuergeräte über mindestens einen Zugang zur Datenübertragung mittels eines Testgerätes ansteuerbar ist, wobei dem Bussystem eine multifunktionale Datenübertragungseinrichtung vorgeschaltet ist, an die die Subnetze direkt parallel anschließbar sind und über die mehrere, der auf den angeschlossenen Subnetzen verteilten Steuergeräte zeitlich parallel ansteuerbar sind.

WO 2006/79651 A1 erläutert ein Verfahren zum Übertragen von Daten in Botschaften über eine Kommunikationsverbindung eines Kommunikationssystems, sowie Kommunikationsbaustein , Teilnehmer eines Kommunikationssystems und Kommunikationssystem zur Realisierung dieses Verfahrens. Die Botschaften werden in vorgebbaren Zeitfenstern über die Kommunikationsverbindung zyklisch übertragen, wobei über die Kommunikationsverbindung zu sendende und gesendete Botschaften zunächst in einem Botschaftsspeicher eines Kommunikationsbausteins zwischengespeichert werden und die in einem aktuellen Zeitfenster zu sendende bzw. zu empfangende Botschaft aus dem Botschaftsspeicher entnommen und gesendet bzw. empfangen und in dem Botschaftsspeicher abgelegt wird. Um die Echtzeitfähigkeit des Kommunikationsbausteins zu verbessern wird vorgeschlagen, dass zur Ermittlung der Positionen der Botschaften in dem Botschaftsspeicher dieser in regelmäßigen Abständen jeweils für mehrere noch folgende Zeitfenster im Voraus durchsucht wird, und dass als Ergebnis eines Suchdurchlaufs die Positionen der in den mehreren noch folgenden Zeitfenstern zu sendenden bzw. zu empfangenden Botschaften in einem dem Botschaftsspeicher zugeordneten Zwischenspeicher abgelegt werden. Im Rahmen der eigentlichen Datenübertragung (Senden oder Empfangen von Botschaften) wird einfach auf den Zwischenspeicher und über die dort abgelegten Positionen auf die passenden Botschaftsobjekte im Botschaftsspeicher zugegriffen.

Es ist daher die Aufgabe der vorliegenden Erfindung, die Übertragungskapazität eines Buskontrollers bei einer Testvorrichtung zu vergrößern.

Zur Lösung der Aufgabe ist eine Testvorrichtung gemäß der technischen Lehre des Anspruchs 1 vorgesehen. Ferner wird die Aufgabe durch ein Testverfahren gemäß der technischen Lehre des unabhängigen Anspruchs 14 gelöst.

Ein Grundgedanke der Erfindung ist es, dass das Sendevorbereitungsmittel zusätzliche Busnachrichten in den Nachrichtenspeicher sozusagen einschiebt, die innerhalb eines Sendezyklusses oder einer Sendezyklusfolge auf dem Kraftfahrzeug-Bus zu senden sind. Das Sendevorbereitungsmittel arbeitet dem Buskontroller vorauseilend, das heißt, es steht rechtzeitig die zu sendende Busnachricht in dem Nachrichtenspeicher bereit, den der Buskontroller ausliest.

Busnachrichtensequenz kann im Sinne der Erfindung heißen, dass nur eine einzige Busnachricht gesendet werden kann. Ferner kann die Busnachrichtensequenz auch Sendeunterbrechungen enthalten, das heißt, zwischen den zu sendenden Busnachrichten können auch andere Busteilnehmer Busnachrichten senden. Dies ist beispielsweise bei einem TDMA-Verfahren üblich (TDMA = Time Division Multiple Access). Wenn die Testvorrichtung Busnachrichten anderer Busteilnehmer empfängt, kann man den Sendezyklus auch Sende- und Empfangszyklus oder die Sendezyklusfolge auch Sende- und Empfangszyklusfolge nennen.

Im Sinne der Erfindung kann ein standardisierter Buskontroller, das heißt eine Standard-Komponente, verwendet werden. Die Speicherkapazität des Nachrichtenspeichers muss nicht erweitert werden. Beispielsweise kann der Buskontroller eine standardisierte Software- oder Hardware-Komponente sein.

Der Nachrichtenspeicher bildet sozusagen einen Pufferspeicher. Der Buskontroller sendet innerhalb eines Sendezyklusses oder einer Sendezyklusfolge mit mehreren Sendezyklen eine größere Anzahl von Busnachrichten, als die Speicherkapazität seines Nachrichtenspeichers an sich zulässt.

Die Testvorrichtung kann beispielsweise als ein Simulator eingesetzt werden und eine Vielzahl von Busteilnehmern simulieren.

Zweckmäßigerweise liest der Buskontroller die Sendedaten sequenziell aus dem Nachrichtenspeicher aus. Die Sendevorbereitungsmittel arbeiten dem Auslesen des Buskontrollers vorauseilend.

Es versteht sich, dass der Nachrichtenspeicher ein reiner Sendespeicher sein kann. Es ist bevorzugt, dass der Nachrichtenspeicher ein Sende- und Empfangsspeicher ist, in dem zu sendende und auch empfangene Busnachrichten gespeichert werden.

Erfindungsgemäß haben die Sendevorbereitungsmittel ein Kopf-Vorbereitungsmittel zum Einschreiben von Kopfdaten in den Nachrichtenspeicher. Ferner enthalten die Sendevorbereitungsmittel ein Nutzdaten-Vorbereitungsmittel zum Einschreiben von Nutzdaten in den Nachrichtenspeicher. Die Kopfdaten dienen zur Erzeugung von Nachrichtenköpfen der Busnachrichten, während die Nutzdaten für sich an die Nachrichtenköpfe anschließende Nutzdaten vorgesehen sind. Das Kopf-Vorbereitungsmittel arbeitet dem Nutzdaten-Vorbereitungsmittel vorauseilend dergestalt, dass die Kopfdaten bereits vor Eintritt einer Sperrphase, in der der Buskontroller ein Einschreiben von Nachrichtenköpfen in den Nachrichtenspeicher vor dem Senden einer jeweiligen Busnachricht im Voraus blockiert, bereits eingeschrieben sind, die Nutzdaten aber noch verändert werden können. Daher kann das Nutzdaten-Vorbereitungsmittel die Nutzdaten noch verändern, während die Kopfdaten einer jeweiligen Busnachricht bereits feststehen. Der Buskontroller bereitet sich in dieser Sperrzeit bereits darauf vor, an die jeweilige Busnachricht zu senden.

Den Kopfdaten ist in dem Nachrichtenspeicher zweckmäßigerweise ein Index oder ein Zeiger auf einen Speicherplatz zugeordnet, der auf die jeweiligen Nutzdaten der zu sendenden Busnachricht zeigt.

Zwar könnte die Sperrphase durch eine zeitliche Bedingung definiert sein. Vorzugsweise ist die Sperrphase jedoch durch eine Sperr-Anzahl von Busnachrichten definiert, um die der Buskontroller ein Einschreiben von Nachrichtenköpfen in den Nachrichtenspeicher blockiert. Der Buskontroller blockiert beispielsweise die Kopfdaten einer vorbestimmten Sperr-Anzahl von Busnachrichten, die nachfolgend zu der aktuell zu sendenden Busnachricht zu senden sind.

Die Speicherkapazität des Nachrichtenspeichers ist für eine von einer Größe der Busnachrichten abhängige Maximalzahl von Busnachrichten vorgesehen. Es versteht sich, dass bei größeren Busnachrichten die Speicherkapazität für weniger Busnachrichten ausreicht, während eine größere Anzahl von kleineren Busnachrichten in dem Nachrichtenspeicher Platz haben.

Der Bus ist vorzugsweise ein TDMA-Bus (TDMA = Time Division Multiple Access). Vorzugsweise ist der Bus ein FlexRay-Bus.

Vorzugsweise hat die Testvorrichtung zum Empfangen von in den Zwischenspeicher einzuschreibenden Sendedaten eine Steuerschnittstelle für eine Bedieneinrichtung, beispielsweise einen Personal Computer. Auf der Bedieneinrichtung läuft zweckmäßigerweise als ein Anwendungsprogramm ein Testprogramm, das mit der Testvorrichtung über die Steuerschnittstelle kommuniziert und dort beispielsweise die zu sendenden Busnachrichten und/oder die zu empfangenden Busnachrichten definiert.

Vorzugsweise ist die Testvorrichtung zum Senden von Quittiermeldungen über die Steuerschnittstelle ausgestaltet, wobei die Quittiermeldungen auf dem Kraftfahrzeug-Bus von dem Buskontroller gesendete Busnachrichten quittieren. Somit hat das beispielsweise auf dem Personal Computer laufende Testprogramm eine Rückmeldung, ob eine zu sendende Busnachricht tatsächlich gesendet ist. Der Buskontroller markiert beispielsweise in dem Nachrichtenspeicher Busnachrichten als "gesendet", wenn er sie auf dem Bus abgesendet hat.

Die Quittiermeldungen können den Inhalt der Busnachrichten ganz oder teilweise enthalten, beispielsweise die jeweiligen Kopfdaten.

Zum Empfangen von Busnachrichten mit Hilfe eines Standard-Buskontrollers sind die nachfolgenden Maßnahmen vorteilhaft, die an sich schon eine eigenständige Erfindung darstellen:

Vorzugsweise ist der Buskontroller nämlich zu einem Einschreiben von Busnachrichten anderer Busteilnehmer in dem Nachrichtenspeicher ausgestaltet, die von anderen Busteilnehmern nach oder zwischen den jeweils von dem Buskontroller zu sendenden Busnachrichten innerhalb oder außerhalb der Busnachrichten sequenzgesendet werden. Die anderen Busteilnehmer senden die Busnachrichten beispielsweise zwischen jeweiligen Busnachrichten, die der Buskontroller der Testvorrichtung innerhalb des Sendezyklusses oder der Sendezyklusfolge sendet.

Eine typische Eigenschaft von Standard-Buskontrollern ist es, manche Busnachrichten zwar zu empfangen, diese aber bei geringer Relevanz, beispielsweise wenn sie keine Nutzdaten enthalten, nicht weiterzuleiten. Bei einem FlexRay-Bus sind dies beispielsweise sogenannte Null-Frames. Zu Testzwecken ist es allerdings vorteilhaft, wenn auch diese Null-Frames oder andere Busnachrichten, die an sich sonst verworfen werden, empfangen und beispielsweise an der Steuerschnittstelle für den Personal Computer bereitgestellt werden. Zweckmäßigerweise hat die Testvorrichtung dazu ein Empfangsmittel, das dem Buskontroller Steuerbefehle zum Empfangen von Busnachrichten an vorbestimmten Sendeplätzen (Slots) des Kraftfahrzeug-Busses vorgibt.

Das Empfangsmittel markiert beispielsweise Speicherplätze für jeweils zu empfangende Busnachrichten in dem Nachrichtenspeicher mit einer Empfangskennung, wobei der Buskontroller anhand der Empfangskennung erkennt, dass er die jeweilige Busnachricht auf die mit einer Empfangskennung versehenen Speicherplätze schreiben soll.

Die jeweiligen Speicherplätze sind beispielsweise den Sendeplätzen / Slots des Kraftfahrzeug-Busses zugeordnet. Die Speicherplätze haben beispielsweise eine Slot-Kennung.

Der Buskontroller beschreibt zweckmäßigerweise diejenigen Speicherplätze, die mit einer Empfangskennung versehen sind, mit einer Nullkennung oder einer "Nichts-Empfangen-Kennung", wenn an dem jeweiligen Sendplatz / Slot keine Busnachricht empfangen worden ist. Der Buskontroller beschreibt vorteilhaft diejenigen mit einer Empfangskennung versehenen Speicherplätze mit einer Nullinformationskennung, z.B. einer Null-Frame-Kennung, insbesondere einem Null-Frame-Flag, wenn die jeweilige Busnachricht beispielsweise eine Nullinformation enthält, das heißt beispielsweise ein Null-Frame ist. Das Empfangsmittel gibt die Nullkennung oder "Nichts-Empfangen-Kennung" oder die Nullinformationskennung zweckmäßigerweise an der Steuerschnittstelle aus.

Auch beim Empfang ist das vorauseilende Arbeiten im Sinne der Erfindung vorteilhaft. Die Speicherkapazität des Empfangsspeichers, der gleichzeitig der Sendespeicher des Buskontrollers sein kann, ist begrenzt. Das Empfangsmittel liest jedoch die empfangenen Busnachrichten derart schnell und vorauseilend aus dem Nachrichtenspeicher aus, dass der jeweilige Speicherplatz des Nachrichtenspeichers schnell wieder zum Einschreiben neuer empfangener Busnachrichten bereitsteht. Welche Busnachrichten jeweils zu empfangen sind, markiert das Empfangsmittel, wie oben bereits erläutert, in dem Nachrichtenspeicher des Buskontrollers.

Es versteht sich, dass in dem Nachrichtenspeicher nur zu empfangene oder nur zu sendende oder zu sendende und zu empfangende Busnachrichten gespeichert sein können.

Nachfolgend wird ein Ausführungsbeispiel der Erfindung anhand der Zeichnung erläutert. Es zeigen:

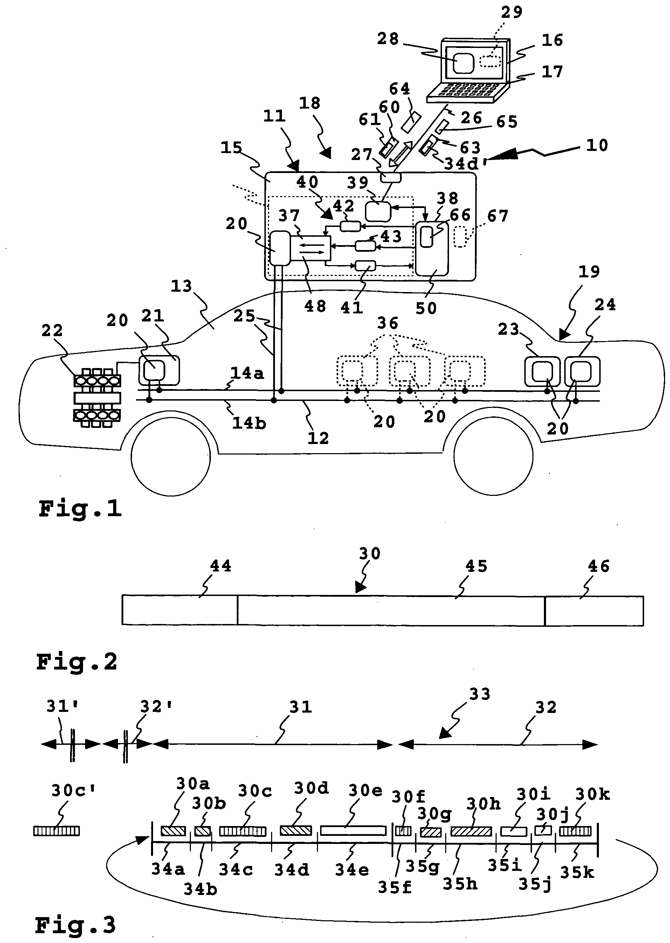

- Figur 1: eine schematische Ansicht einer Testvorrichtung zum Testen eines Kraftfahrzeug-Busses eines Kraftfahrzeuges,
- Figur 2: eine schematische Busnachricht, die auf dem Kraftfahrzeug-Bus gesendet wird,
- Figur 3: eine Sendezyklusfolge mit zwei Sendezyklen, während derer Busnachrichten auf dem Kraftfahrzeug-Bus gesendet werden,
- Figur 4: schematische Ansichten eines Nachrichtenspeichers und eines Zwischenspeichers der Testvorrichtung gemäß Figur 1 und
- Figur 5: eine weitere schematische Ansicht des Zwischenspeichers gemäß Figur 4.

Eine Testanordnung 10 enthält eine Testvorrichtung 11 zur Anbindung an einen Kraftfahrzeug-Bus 12 eines Kraftfahrzeugs 13. Der Kraftfahrzeug-Bus 12 ist ein FlexRay-Bus.

Der Kraftfahrzeug-Bus 12 enthält Kanäle 14a, 14b. Die Testvorrichtung 11 kann auch als ein Busankoppler 15 für eine Bedieneinrichtung 16 bezeichnet werden. Die Bedieneinrichtung 16 enthält einen Personal Computer, beispielsweise ein Notebook, das mit dem Busankoppler 15 an den Kraftfahrzeug-Bus 12 ankoppelbar ist.

Insgesamt bildet die Testanordnung 10 ein Simulations- und Analysewerkzeug 18 zum Simulieren von Buslast auf dem Bus 12 oder zur Analyse von auf dem Bus 12 übermittelten Busnachrichten.

An den Kraftfahrzeug-Bus 12 sind Busteilnehmer 19 angekoppelt, die jeweils einen Buskontroller 20 enthalten. Die Busteilnehmer 19 umfassen beispielsweise ein Motorsteuergerät 21 zum Steuern eines Motors 22, einen Sensor 23 sowie einen Aktor 24, die jeweils mit einem Buskontroller 20 an den Kraftfahrzeug-Bus 12 angekoppelt sind. Während das Motorsteuergerät 21 beispielsweise an beide Kanäle 14a, 14b angekoppelt ist, sind die Sensoren und Aktoren 23, 24 nur an jeweils einen der Kanäle 14a und 14b angekoppelt.

Die Testvorrichtung 11 ist über Anschlussleitungen 25 an den Bus 12 angekoppelt, vorliegend an beide Kanäle 14a, 14b, wobei es möglich wäre, dass die Testvorrichtung 11 nur an einen der Kanäle 14a oder 14b angekoppelt wird.

Die Bedieneinrichtung 16 ist über eine Leitung 26 mit dem Busankoppler 15 verbunden. Die Leitung 26 ist beispielsweise an eine Steuerschnittstelle 27 der Testvorrichtung 11 angekoppelt. Die Bedieneinrichtung 16 enthält ein Simulations- und Analysemodul 28, das heißt eine Software, die von einem Prozessor 29 der Bedieneinrichtung 16 ausführbaren Programmcode enthält.

Die Busteilnehmer 19 sowie die Testvorrichtung 11 senden Busnachrichten 30a-30k auf dem Bus 12. Die Busnachrichten 30a-30e sind Busnachrichten eines ersten Sendezyklusses 31, während die Busnachrichten 30f-30k Bestandteile eines zweiten Sendezyklusses 32 bilden. Die Sendezyklen 31, 32 sind Bestandteile einer Sendezyklusfolge 33.

Zum Senden der Busnachrichten 30a-30e stehen Sendeplätze beziehungsweise Slots 34a-34e des Sendezyklusses 31 zur Verfügung. Die Busnachrichten 30f-30k haben Sendeplätze 35f-35k des Sendezyklusses 32.

Das Kraftfahrzeug 13 befindet sich in einem Simulations- oder Teststadium. Beispielsweise sollen weitere, geplante Busteilnehmer 36 an den Bus 12 angekoppelt werden, die jedoch noch nicht vollständig entwickelt sind und später einmal Buskontroller 20 enthalten werden. Es ist Aufgabe der Testvorrichtung 11, Busnachrichten anstelle der geplanten Busteilnehmer 36 auf dem Bus 12 zu senden. Hierfür wären an sich drei Buskontroller 20 bei der Testvorrichtung 11 erforderlich, da eine Speicherkapazität 48 von Nachrichtenspeichern 37 der Buskontroller 20 an sich nicht ausreicht, um sämtliche von den geplanten Busteilnehmern 36 zu sendenden Busnachrichten 30 zu speichern. Hier schafft die Erfindung Abhilfe:

Die Testvorrichtung 11 enthält einen Zwischenspeicher 38, der letztlich zur Vergrößerung der Kapazität des Nachrichtenspeichers 37 dient. Der Zwischenspeicher 38 und der Nachrichtenspeicher 37 sind jedoch voneinander getrennte Baueinheiten.

Eine Kommunikationsfunktion 39, beispielsweise eine Software-Funktion, der Testvorrichtung 11 empfängt an der Steuerschnittstelle 27 von dem Simulations- und Analysemodul 28 auf dem Bus 12 zu sendende Busnachrichten 30 und schreibt diese in den Zwischenspeicher 38 ein.

Ein Sendevorbereitungsmittel 40 liest den Zwischenspeicher 38 aus und schreibt die dort abgelegten Daten für zu sendende Busnachrichten 30 in den Nachrichtenspeicher 37 ein.

In Empfangsrichtung ist eine Empfangsfunktion 41, die ein Empfangsmittel bildet, aktiv. Die Empfangsfunktion 41 liest von dem Buskontroller 20 empfangene und in den Nachrichtenspeicher 37 eingeschriebene Busnachrichten 30 aus und schreibt deren Inhalt in den Zwischenspeicher 38 ein. Die Kommunikationsfunktion 39 liest dann von der Testvorrichtung 11 empfangene Busnachrichten 30 aus dem Zwischenspeicher 38 aus und übermittelt sie an das Simulations- und Analysemodul 28 der Bedieneinrichtung 16.

Jede der Busnachrichten 30 (30a-30k) enthält einen Nachrichtenkopf 44 sowie Nutzdaten 45 und einen Prüfteil 46. Die Busnachrichten 30 können auch weitere Informationen enthalten, beispielsweise Zeitinformationen oder dergleichen.

Es ist Aufgabe der Buskontroller 20, die Kommunikation auf dem Kraftfahrzeug-Bus 12 abzuwickeln. Dies umfasst beispielsweise die Generierung von Prüfteilen 46, eine zeitliche Synchronisation mit den jeweiligen anderen Busteilnehmern 19, 36 und dergleichen.

Die geplanten Busteilnehmer 36, die von der Testvorrichtung 11 simuliert werden, sollen beispielsweise die Busnachrichten 30a, 30b, 30d, 30g und 30h senden. Dies ist nachfolgend mit einem Index s gekennzeichnet und durch eine schräge Schraffur verdeutlicht. Die Testvorrichtung 11 soll weiterhin Busnachrichten 30c, 30f und 30k empfangen, was durch einen Index r und eine vertikale Schraffur verdeutlicht ist. Die zu empfangenden Busnachrichten 30c, 30f und 30k werden beispielsweise von den Busteilnehmern 19 gesendet. Die weitere, von einem der Busteilnehmer 19 gesendete Busnachricht 30e interessiert die Testvorrichtung 11 nicht.

Zwar würde die Speicherkapazität 48 des Nachrichtenspeichers 37 für die zu sendenden Busnachrichten 30a, 30b, 30d, 30g, 30h einer Busnachrichtensequenz 47 an sich ausreichen. In dem Nachrichtenspeicher 37 ist jedoch auch Speicherplatz für zu empfangende Busnachrichten 30 vorzuhalten, sodass insgesamt die Speicherkapazität 48 nicht für sämtliche zu sendenden Busnachrichten 30 der Busnachrichtensequenz 47 ausreicht.

Das Simulations- und Analysemodul 28 übermittelt Sendedaten 65 für die zu sendenden Busnachrichten 30a, 30b, 30d, 30g und 30h der Busnachrichtensequenz 47 an die Testvorrichtung 11. Dort empfängt die Kommunikationsfunktion 39 diese Busnachrichten-Sendedaten 65 und schreibt sie als Kopfdaten 54a, 54b, 54d, 54g und 54h sowie als diesen Kopfdaten zugeordnete Nutzdaten 55a, 55b, 55d, 55g und 55h auf Speicherplätze 49 des Zwischenspeichers 38. Die Kopfdaten 54a und die Nutzdaten 55a dienen beispielsweise zur Erzeugung der Busnachricht 30a.

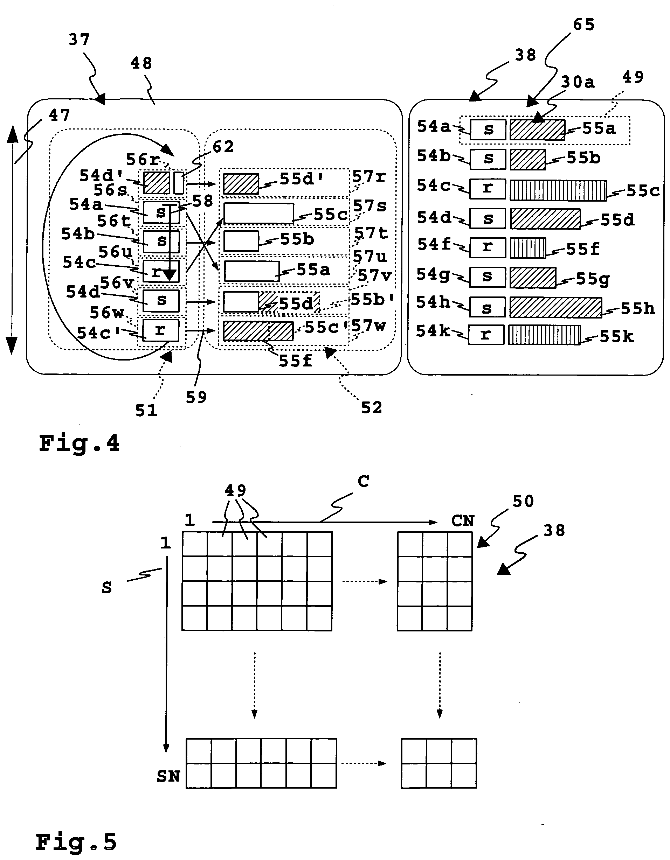

Der Zwischenspeicher 38 hat eine wesentlich größere Speicherkapazität 50 als der Nachrichtenspeicher 37 des Buskontrollers 20, der lediglich eine kleinere Speicherkapazität 48 zum Speichern von ca. sechs zu sendenden oder zu empfangenden Busnachrichten 30 aufweist. Bei der Darstellung in Figur 4 sind insgesamt acht der Speicherplätze 49 exemplarisch dargestellt. Der Zwischenspeicher 38 kann beispielsweise matrixartig organisiert sein, wobei eine Struktur von Sendeplätzen oder Slots S, die in Zyklen C zum Senden und Empfangen von Busnachrichten 30 auf dem Bus 12 bereitstehen, die Zeilen und Spalten dieser Matrix bilden. Beispielsweise kann ein FlexRay-Bus eine Maximalzahl CN von Zyklen C aufweisen, wobei diese Zyklen jeweils eine Maximalzahl SN Slots aufweisen können. Bei FlexRay sind beispielsweise 2.048 Slots und 64 Zyklen möglich. Es versteht sich, dass die Speicherplätze 49 vorzugsweise dynamisch organisiert sind, sodass die Speicherkapazität 50 optimal ausnutzbar ist.

Das vorauseilende Einschreiben von Daten für Busnachrichten 30 aus dem Zwischenspeicher 38 in den Nachrichtenspeicher 37 sowie in umgekehrter Richtung das rechtzeitige Auslesen empfangener Busnachrichten 30 aus dem Nachrichtenspeicher 37 und Übertragen in den Zwischenspeicher 38 verläuft folgendermaßen:

Eine Kopffunktion 42, die ein Kopf-Vorbereitungsmittel bildet, schreibt einer Nutzdatenfunktion 43 vorauseilend die Kopfdaten 54a, 54b, 54d, 54g oder 54h der jeweils nächsten zu sendenden Busnachrichten aus dem Zwischenspeicher 38 aus und schreibt sie in einen Kopfdaten-Bereich 51 des Nachrichtenspeichers 37 auf einen der Speicherplätze 56r - 56w.

Eine Nutzdatenfunktion 43, die ein Nutzdaten-Vorbereitungsmittel bildet, schreibt die den Kopfdaten 54a, 54b, 54d, 54g und 54h zugeordneten Nutzdaten 55a, 55b, 55d, 55g und 55h in Nutzdaten-Speicherplätze 57r - 57w eines Nutzdaten-Bereichs 52 des Nachrichtenspeichers 37.

Der Buskontroller 20 der Testvorrichtung 11 sperrt für eine Sperrphase 58 zum Senden anstehende Busnachrichten 30. So sind beispielsweise die Speicherplätze 56s, 56t und 56u für die zum Senden anstehenden Busnachrichten 30a, 30b sowie die auf dem Sendeplatz / Slot 34c zu empfangende Busnachricht 30c. Die Kopfdaten-Speicherplätze 56s, 56t und 56u sind für die Kopffunktion 42 gesperrt. Die Kopffunktion 42 hat jedoch bereits auf den Speicherplätzen 56s, 56t die Kopfdaten 54a, 54b bereitgestellt. Noch bevor der Buskontroller 20 auch den nachfolgenden Kopfdaten-Speicherplatz 56v gegen ein Schreiben von Daten blockiert, schreibt die Kopffunktion 42 die Kopfdaten 54d auf den Speicherplatz 56v. Die Kopffunktion 42 arbeitet somit dem Buskontroller 20 vorauseilend.

Die Nutzdatenfunktion 43 kann sich beim Einschreiben von Daten in den Nutzdaten-Bereich 52 sozusagen etwas mehr Zeit lassen. Zwar kann die Nutzdatenfunktion 43 beispielsweise die Nutzdaten 55a der aktuell zu sendenden Busnachricht 30a nicht mehr verändern, weil der Buskontroller 20 die dort gespeicherten Nutzdaten 55a bereits zum Bilden der Busnachricht 30a benötigt und somit zweckmäßigerweise den Speicherplatz 57u blockiert. Die Nutzdaten 55b hingegen, die der Busnachricht 30b zugeordnet sind, kann die Nutzdatenfunktion 43 noch verändern. Somit ist es möglich, dass beispielsweise die Kommunikationsfunktion 39 in dem Zwischenspeicher 38 die Nutzdaten 55b manipuliert und die Nutzdatenfunktion 43 diese noch kurzfristig verändert und die Nutzdaten 55b in den Nachrichtenspeicher 37 an dem Speicherplatz 57t einschreibt, während der Buskontroller 20 bereits die Busnachricht 30a auf dem Bus 12 sendet. Somit kann die Testanordnung 10 hochdynamisch Busnachrichten 30 auf dem Bus 12 zu Simulationszwecken senden.

Selbstverständlich können die Kopffunktion 42 und die Nutzdatenfunktion 43 auch weiter in der Zukunft zu sendende Busnachrichten 30 in dem Nachrichtenspeicher 37 verändern und beispielsweise die Kopfdaten 54d und Nutzdaten 55d auf Speicherplätze 56v, 57v schreiben. Der Speicherplatz 57v enthält beispielsweise noch Nutzdaten 55b' von einem vorhergehenden Sendezyklus 31'. Die Nutzdatenfunktion 43 überschreibt die Nutzdaten 55b' mit den Nutzdaten 55d.

Auch die Empfangsfunktion 41 arbeitet dem Buskontroller 20 vorauseilend. So liest die Empfangsfunktion 41 beispielsweise die Speicherplätze 56w, 57w rechtzeitig vor dem Wiederbeschreiben durch den Buskontroller 20 aus. An den Speicherplätzen 56w, 57w stehen beispielsweise noch Nutzdaten 54c' und 55c' einer Busnachricht 30c' eines Sendezyklusses 31', der dem aktuellen Sendezyklus 31 vorausgegangen ist. Die Empfangsfunktion 41 überträgt die Daten der Busnachricht 30c' in den Zwischenspeicher 38, wo sie von der Kommunikationsfunktion 39 ausgelesen und an das Simulations- und Analysemodul 28 übermittelt werden. Der Zwischenspeicher 38 enthält hierfür z.B. eine Empfangsqueue 66 und/oder es ist eine vom Zwischenspeicher 38 separate Empfangsqueue 67 vorgesehen. Die Speicherplätze 56w, 57w sind also bereits von der Empfangsfunktion 41 ausgelesen, wenn die Kopffunktion 42 und die Nutzdatenfunktion 43 diese Speicherplätze wieder mit neuen Kopfdaten 54f und Nutzdaten 55f des aktuellen Sendezyklusses 32' beschreiben.

Auf den Speicherplätzen 56r, 57r stehen noch Kopfdaten 54d', 55d' einer Busnachricht 34d' des Sendezyklusses 31'.

Von den Kopfdaten-Speicherplätzen 56r-56w verweisen Zeiger auf die Nutzdaten-Speicherplätze 57r-57w, was durch Pfeile 59 angedeutet ist.

Die Testvorrichtung 11 kann den Buskontroller 20 zum Empfangen von Busnachrichten 30 auch sozusagen "zwingen". Wenn ein Buskontroller 20 beispielsweise Busnachrichten ohne einen Inhalt, sogenannte Null-Frames oder dergleichen, empfängt, schreibt er diese üblicherweise nicht oder nur teilweise in den Nachrichtenspeicher 37. Zu Analysezwecken des Busses 12 kann es jedoch zweckmäßig sein, auch Null-Frames oder an sich zu verwerfende Busnachrichten 30 zu empfangen und beispielsweise mit Hilfe des Simulations- und Analysemoduls 28 auszugeben.

Die Empfangsfunktion 41 markiert beispielsweise die jeweils "zwangsweise" zu empfangenden Busnachrichten 30c und 30f beziehungsweise den zugeordneten Slots 34c, 35f der Sendezyklen 31, 32 zugeordnete Bereiche im Nachrichtenspeicher 37 mit einer Empfangskennung r, die dem Buskontroller 20 signalisiert, dass die auf den Slots 34c, 35f zu empfangenden Busnachrichten 30 auf jeden Fall empfangen werden sollen. Dazu erhält die Empfangsfunktion 41 z.B. einen Steuerbefehl 64 von dem Simulations- und Analysemodul 28. So steht beispielsweise an den Kopfdaten-Speicherplätzen 56u und 56w die Empfangskennung r. Wenn der Buskontroller 20 dort die Daten empfangener Busnachrichten einschreibt, werden diese von der Empfangsfunktion 41 ausgelesen und an der Steuerschnittstelle 27 ausgegeben. Wenn beispielsweise die Nutzdaten der Busnachricht 30c' keine Information enthielten, zum Beispiel nur eine Null-Information, das heißt die Busnachricht 30c' ein sogenannte Null-Frame war, überträgt die Empfangsfunktion 41 zweckmäßigerweise eine Meldung 60 mit einer Nullkennung 61 an der Steuerschnittstelle 27.

Ferner quittiert die Testvorrichtung 11 vorteilhafterweise auf dem Bus 12 gesendete Busnachrichten 30. Der Buskontroller 20 markiert beispielsweise auf dem Bus 12 gesendete Busnachrichten mit einer Sendekennung 62. Die Empfangsfunktion 41 ermittelt anhand der Sendekennung 62, dass die jeweilige Busnachricht 30 auf dem Bus 12 gesendet worden ist, beispielsweise die Busnachricht 30d' des Sendezyklusses 31', und übermittelt für jeweils gesendete Busnachrichten 30, beispielsweise die Busnachrichten 30d', eine Quittiermeldung 63. Die Quittiermeldung 63 enthält Daten der Busnachricht 30d', zweckmäßigerweise die gesamte Busnachricht 30d'.

Die Kommunikationsfunktion 39, die Empfangsfunktion 41, die Kopffunktion 42 und die Nutzdatenfunktion 43 sind zweckmäßigerweise als sogenannte Engines ausgestaltet, das heißt beispielsweise als Update-Engine, Rx-Engine, Header-Engine und Tx-Engine. Die Funktionen 39, 41, 42 und 43 laufen zweckmäßigerweise nacheinander zyklisch ab, beispielsweise durch gegenseitigen aufeinanderfolgenden Aufruf, durch ein nicht dargestelltes Betriebssystem, durch einen zentralen Steuerblock oder dergleichen. Dadurch werden Kollisionen zwischen den einzelnen Funktionen 39, 41, 42 und 43 vermieden, sodass beispielsweise die Daten im Zwischenspeicher 38 stets konsistent sind.

Der Buskontroller 20 sowie die Funktionen 39, 41-43 sind beispielsweise Bestandteile eines FPGAs. (Field Programmable Gate Array.) Es versteht sich, dass auch eine anderweitige Realisierung möglich ist, beispielsweise als eine Software, die von einem Prozessor ausgeführt wird, oder dergleichen.

## Patentansprüche

1. Testvorrichtung für einen Kraftfahrzeug-Bus (12), wobei die Testvorrichtung (11) einen Buskontroller (20) zum Senden und Empfangen von Busnachrichten (30) enthält, wobei der Buskontroller (20) einen Nachrichtenspeicher (37) zum Bereitstellen von Sendedaten (65) für mehrere Busnachrichten (30) aufweist, wobei der Nachrichtenspeicher (37) eine Speicherkapazität (48) für eine Busnachrichtensequenz (47) mit innerhalb eines einzigen Sendezyklusses (31, 32) oder einer Sendezyklusfolge (33) zu sendenden Busnachrichten (30) aufweist, wobei die Testvorrichtung (11) einen Zwischenspeicher (38) zum Speichern von Sendedaten (65) für Busnachrichten mit einer größeren Speicherkapazität (50) als der Nachrichtenspeicher (37) aufweist, wobei die Testvorrichtung (11) ein Sendevorbereitungsmittel (40) zum Auslesen der Sendedaten (65) aus dem Zwischenspeicher (38) und zu einem einem Lesen des Buskontrollers (20) vorauseilenden Einschreiben in den Nachrichtenspeicher (37) des Buskontrollers (20) aufweist, so dass die Busnachrichtensequenz (47) um zusätzliche Busnachrichten (30) erweitert ist, die der Buskontroller (20) innerhalb des Sendezyklusses (31, 32) oder der Sendezyklusfolge (33) auf dem Kraftfahrzeug-Bus (12) sendet, **dadurch gekennzeichnet dass** das Sendevorbereitungsmittel (40) ein Kopf-Vorbereitungsmittel zum Einschreiben von Kopfdaten (54a-54k) in den Nachrichtenspeicher (37) und ein Nutzdaten-Vorbereitungsmittel zum Einschreiben von Nutzdaten (55a-55k) in den Nachrichtenspeicher (37) aufweist, wobei die Kopfdaten (54a-54k) zur Erzeugung von Nachrichtenköpfen der Busnachrichten und die Nutzdaten (55a-55k) für sich an die Nachrichtenköpfe jeweils anschließende Nutzdaten (55a-55k) der Busnachrichten (30) vorgesehen sind, wobei das Kopf-Vorbereitungsmittel die Nachrichtenköpfe in den Nachrichtenspeicher (37) einschreibt bevor das Nutzdaten-Vorbereitungsmittel die zugeordneten Nutzdaten (55a-55k) in den Nachrichtenspeicher (37) einschreibt, so dass die Nutzdaten-Vorbereitungsmittel die Nutzdaten (55a-55k) während einer Sperrphase (58), in der der Buskontroller (20) ein Einschreiben von Nachrichtenköpfen in den Nachrichtenspeicher (37) vor dem Senden einer jeweiligen Busnachricht (30) im Voraus blockiert, verändern können.

2. Testvorrichtung nach Anspruch 1, **dadurch gekennzeichnet, dass** die Speicherkapazität (48) des Nachrichtenspeichers (37) für eine von einer Größe der Busnachrichten (30) abhängige Maximalzahl von Busnachrichten (30) vorgesehen ist.

3. Testvorrichtung nach Anspruch 1 oder 2, **dadurch gekennzeichnet, dass** der Bus für ein TDMA-Zugriffsverfahren (Time Division Multiplex Acceess) ausgestaltet ist, insbesondere ein FlexRay-Bus ist.

4. Testvorrichtung nach einem der vorhergehenden Ansprüche, **dadurch gekennzeichnet, dass** sie zum Empfangen von in den Zwischenspeicher (38) einzuschreibenden Sendedaten (65) eine Steuerschnittstelle (27) für eine Bedieneinrichtung (16), insbesondere einen Personal Computer (17), aufweist.

5. Testvorrichtung nach Anspruch 4, **dadurch gekennzeichnet, dass** sie zum Senden von Quittiermeldungen (63) über die Steuerschnittstelle (27) ausgestaltet ist, wobei die Quittiermeldungen (63) auf dem Kraftfahrzeug-Bus (12) von dem Buskontroller (20) gesendete Busnachrichten (30) quittieren.

6. Testvorrichtung nach Anspruch 5, **dadurch gekennzeichnet, dass** die Quittiermeldungen (63) den Inhalt der gesendeten Busnachrichten (30) ganz oder teilweise enthalten.

7. Testvorrichtung nach einem der vorhergehenden Ansprüche, **dadurch gekennzeichnet, dass** der Buskontroller (20) zum Einschreiben von Busnachrichten (30) anderer Busteilnehmer (19) in den Nachrichtenspeicher (37) ausgestaltet ist, die von anderen Busteilnehmern (19) zwischen jeweils von dem Buskontroller (20) zu sendenden Busnachrichten (30) innerhalb oder außerhalb der Busnachrichtensequenz (47) gesendet werden.

8. Testvorrichtung nach einem der vorhergehenden Ansprüche, **dadurch gekennzeichnet, dass** sie ein Empfangsmittel (41) aufweist, das dem Buskontroller (20) Steuerbefehle (64) zum Empfangen von Busnachrichten (30) an vorbestimmten Sendeplätzen (34a-34e, 35f-35k) (Slots) des Kraftfahrzeug-Busses (12) vorgibt.

9. Testvorrichtung nach Anspruch 8, **dadurch gekennzeichnet, dass** das Empfangsmittel (41) zum Schreiben einer Empfangskennung (r) für Sendeplätze (34a-34e, 35f-35k) (Slots) an den Buskontroller (20) ausgestaltet ist, an denen der Buskontroller (20) Busnachrichten (30) empfangen soll.

10. Testvorrichtung nach Anspruch 9, **dadurch gekennzeichnet, dass** ein jeweiliger Speicherplatz (56r-56w, 57r-57w) des Nachrichtenspeichers (37) einem Sendeplatz (34a-34e, 35f-35k) des Kraftfahrzeug-Busses (12) zugeordnet ist, und dass das Empfangsmittel (41) zum Markieren von Speicherplätzen (56r-56w, 57r-57w) für jeweils zu empfangende Busnachrichten (30) in dem Nachrichtenspeicher (37) mit der Empfangskennung (r), ausgestaltet ist, wobei der Buskontroller (20) die empfangenen Busnachrichten (30) in die mit der Empfangskennung (r) versehenen Speicherplätze (56r-56w, 57r-57w) schreibt.

11. Testvorrichtung nach Anspruch 9 oder 10, **dadurch gekennzeichnet, dass** der Buskontroller (20) Speicherplätze (56r-56w, 57r-57w) mit einer Nullkennung (61) oder einer Nullinformationskennung beschreibt, wenn dem Speicherplatz (56r-56w, 57r-57w) eine Empfangskennung (r) zugeordnet ist und der Buskontroller (20) an dem jeweiligen Sendeplatz (34a-34e, 35f-35k) keine Busnachricht (30) oder eine Busnachricht (30) mit einer Nullinformation empfangen hat, und dass das Empfangsmittel (41) zum Ausgeben der Nullkennung (61) und der Nullinformationskennung an der Steuerschnittstelle (27) ausgestaltet ist.

12. Testvorrichtung nach einem der Ansprüche 4 bis 11, **dadurch gekennzeichnet, dass** sie zum Auslesen von empfangenen Busnachrichten (30) aus dem Nachrichtenspeicher (37) und zum Übermitteln der empfangenen Busnachrichten (30) an den Zwischenspeicher (38) und/oder die Steuerschnittstelle (27) ausgestaltet ist, wobei die Testvorrichtung einen eine empfangene Busnachricht (30) enthaltenden Speicherplatz (56r-56w, 57r-57w) des Nachrichtenspeichers (37) vor dem Wiederbeschreiben durch den Buskontroller (20) ausliest.

13. Testvorrichtung nach einem der vorhergehenden Ansprüche, **dadurch gekennzeichnet, dass** in dem Nachrichtenspeicher (37) empfangene und zu sendende Busnachrichten (30) speicherbar sind.

14. Testverfahren zum Testen eines Kraftfahrzeug-Busses (12) mit einer Testvorrichtung (11), die einen Buskontroller (20) zum Senden und Empfangen von Busnachrichten (30) enthält, wobei der Buskontroller (20) einen Nachrichtenspeicher (37) zum Bereitstellen von Sendedaten (65) für mehrere Busnachrichten (30) aufweist, wobei der Nachrichtenspeicher (37) eine Speicherkapazität (48) für eine Busnachrichtensequenz (47) mit innerhalb eines einzigen Sendezyklusses (31, 32) oder einer Sendezyklusfolge (33) zu sendenden Busnachrichten (30) aufweist, mit den Schritten:
- Auslesen von Sendedaten (65) für Busnachrichten (30) aus einem Zwischenspeicher (38), der eine größere Speicherkapazität (50) als der Nachrichtenspeicher (37) aufweist, durch ein Sendevorbereitungsmittel (40) der Testvorrichtung (11),
- einem Lesen des Buskontrollers (20) vorauseilendes Einschreiben der Sendedaten (65) in den Nachrichtenspeicher (37) des Buskontrollers (20) durch das Sendevorbereitungsmittel (40), so dass die Busnachrichtensequenz (47) um zusätzliche Busnachrichten (30) erweitert ist, die der Buskontroller (20) innerhalb des Sendezyklusses oder der Sendezyklusfolge (33) auf dem Kraftfahrzeug-Bus (12) sendet, und
- Senden von Busnachrichten (30) anhand der durch das Sendevorbereitungsmittel (40) vorbereiteten Sendedaten (65), **gekennzeichnet durch** das
- Einschreiben von Kopfdaten (54a-54k) in den Nachrichtenspeicher (37) durch ein Kopf-Vorbereitungsmittel des Sendevorbereitungsmittels (40) und Einschreiben von Nutzdaten (55a-55k) in den Nachrichtenspeicher (37) durch ein Nutzdaten-Vorbereitungsmittel des Sendevorbereitungsmittels (40), wobei die Kopfdaten (54a-54k) zur Erzeugung von Nachrichtenköpfen der Busnachrichten und die Nutzdaten (55a-55k) für sich an die Nachrichtenköpfe jeweils anschließende Nutzdaten (55a-55k) der Busnachrichten (30) vorgesehen sind,
- wobei das Kopf-Vorbereitungsmittel die Nachrichtenköpfe in den Nachrichtenspeicher (37) einschreibt bevor das Nutzdaten-Vorbereitungsmittel die zugeordneten Nutzdaten (55a-55k) in den Nachrichtenspeicher (37) einschreibt, so dass die Nutzdaten-Vorbereitungsmittel die Nutzdaten (55a-55k) während einer Sperrphase (58), in der der Buskontroller (20) ein Einschreiben von Nachrichtenköpfen in den Nachrichtenspeicher (37) vor dem Senden einer jeweiligen Busnachricht (30) im Voraus blockiert, verändern können.

## Claims

1. Testing device for a motor vehicle bus (12), wherein the testing device (11) includes a bus controller (20) for the sending and receiving of bus messages (30), wherein the bus controller (20) has a message memory (37) for the provision of sending data (65) for several bus messages (30), wherein the message memory (37) has a memory capacity (48) for a bus message sequence (47) with bus messages (30) to be sent within a single send cycle (31, 32) or a send cycle sequence (33), wherein the testing device (11) has a buffer memory (38) for the storage of sending data (65) for bus messages with a greater memory capacity (50) than the message memory (37), wherein the testing device (11) has send preparation means (40) for reading out the sending data (65) from the buffer memory (38) and for writing into the message memory (37) of the bus controller (20) in advance of reading from the bus controller (20), so that the bus message sequence (47) is expanded by additional bus messages (30) which the bus controller (20) sends to the motor vehicle bus (12) within the send cycle (31, 32) or the send cycle sequence (33), **characterised in that** the send preparation means (40) have header preparation means for the writing of header data (54a-54k) into the message memory (37) and user data preparation means for the writing of user data (55a-55k) into the message memory (37), wherein the header data (54a-54k) are provided for the generation of message headers of the bus messages and the user data (55a-55k) for user data (55a-55k) of the bus messages (30) in each case following the message headers, wherein the header preparation means write the message headers into the message memory (37) before the user data preparation means write the assigned user data (55a-55k) into the message memory (37), so that the user data preparation means are able to change the user data (55a-55k) during a blocking phase (58) in which the bus controller (20) blocks in advance the writing of message headers into the message memory (37) before the sending of a particular bus message (30).

2. Testing device according to claim 1, **characterised in that** the memory capacity (48) of the message memory (37) is provided for a maximum number of bus messages (30) depending on a size of bus messages (30).

3. Testing device according to claim 1 or 2, **characterised in that** the bus is designed for a TDMA procedure and in particular is a Flexray bus.

4. Testing device according to any of the preceding claims **characterised in that**, to receive sending data (65) to be written into the buffer memory (38), it has a control interface (27) for an operating device (16), in particular a personal computer (17).

5. Testing device according to claim 4, **characterised in that** it is designed for the sending of acknowledgement messages (63) over the control interface (27), wherein the acknowledgement messages (63) acknowledge bus messages (30) sent from the bus controller (20) to the motor vehicle bus (12).

6. Testing device according to claim 5, **characterised in that** the acknowledgement messages (63) wholly or partly contain the content of the transmitted bus messages (30).

7. Testing device according to any of the preceding claims, **characterised in that** the bus controller (20) is designed to write into the message memory (37) bus messages (30) of other bus users (19) which are sent by other bus users (19) between bus messages (30) to be sent respectively by the bus controller (20) within or outside the bus message sequence (47).

8. Testing device according to any of the preceding claims, **characterised in that** it has reception means (41) which preset control commands (64) for the bus controller (20) to receive bus messages (30) at predetermined send slots (34a-34e, 35f-35k) of the motor vehicle bus (12).

9. Testing device according to claim 8, **characterised in that** the reception means (41) are designed to write a receive code (r) for send slots (34a-34e, 35f-35k) on the bus controller (20) at which the bus controller (20) should receive bus messages (30).

10. Testing device according to claim 9, **characterised in that** each memory slot (56r-56w, 57r-57w) of the message memory (37) is assigned a send slot (34a-34e, 35f-35k) of the motor vehicle bus (12), and that the reception means (41) are designed for the marking of memory slots (56r-56w, 57r-57w) in the message memory (37) with the receive code (r) for each bus message (30) to be received, wherein the bus controller (20) writes the received bus messages (30) into the memory slots (56r-56w, 57r-57w) provided with the receive code (r).

11. Testing device according to claim 9 or 10, **characterised in that** bus controller (20) describes memory slots (56r-56w, 57r-57w) with a zero code (61) or a zero information code, if the memory slot (56r-56w, 57r-57w) is assigned a receive code (r) and the bus controller (20) has received at the respective send slot (34a-34e, 35f-35k) no bus message (30) or a bus message (30) with zero information, and that the reception means (41) are designed to output the zero code (61) and the zero information to the control interface (27).

12. Testing device according to any of claims 4 to 11, **characterised in that** it is designed to read received bus messages (30) from the message memory (37) and to transfer the received bus messages (30) to the buffer memory (38) and/or the control interface (27), wherein the testing device reads out a memory slot (56r-56w, 57r-57w) of the message memory (37) containing a received bus message (30) before rewriting by the bus controller (20).

13. Testing device according to any of the preceding claims, **characterised in that** bus messages (30) received and to be sent may be stored in the message memory (37).

14. Testing procedure for testing a motor vehicle bus (12) with a testing device (11) which includes a bus controller (20) for the sending and receiving of bus messages (30), wherein the bus controller (20) has a message memory (37) for the provision sending data (65) for several bus messages (30), wherein the message memory (37) has a memory capacity (48) for a bus message sequence (47) with bus messages (30) to be sent within a single send cycle (31, 32) or a send cycle sequence (33), with the steps:
- reading of sending data (65) for bus messages (30) from a buffer memory (38) which has greater memory capacity (50) than the message memory (37), by a send preparation means (40) of the testing device (11)
- writing of sending data (65) into the message memory (37) of the bus controller (20) in advance of reading from the bus controller (20) by the send preparation means (40), so that the bus message sequence (47) is expanded by additional bus messages (30) which the bus controller (20) sends to the motor vehicle bus (12) within the send cycle or the send cycle sequence (33), and
- sending of bus messages (30) with the aid of sending data (65) prepared by the send preparation means (40),
**characterised by** the
- writing of header data (54a-54k) into the message memory (37) by header preparation means of the send preparation means (40) and writing of user data (55a-55k) into the message memory (37) by user data preparation means of the send preparation means (40), wherein the header data (54a-54k) are provided for the generation of message headers of the bus messages and the user data (55a-55k) for user data (55a-55k) of the bus messages (30) following the message headers in each case
- wherein the header preparation means write the message headers into the message memory (37) before the user data preparation means write the assigned user data (55a-55k) into the message memory (37), so that the user data preparation means are able to change the user data (55a-55k) during a blocking phase (58) in which the bus controller (20) blocks in advance the writing of message headers into the message memory (37) before the sending of a particular bus message (30).

## Revendications

1. Dispositif de test pour un bus de véhicule automobile (12), dans lequel le dispositif de test (11) contient une unité de commande de bus (20) pour l'émission et la réception de messages de bus (30), dans lequel l'unité de commande de bus (20) comprend une mémoire de messages (37) pour la mise à disposition de données d'émission (65) pour plusieurs messages de bus (30), dans lequel la mémoire de messages (37) présente une capacité de mémoire (48) pour une séquence de messages de bus (47) avec des messages de bus à émettre (30) à l'intérieur d'un seul cycle d'émission (31, 32) ou d'une série de cycles d'émission (33), dans lequel le dispositif de test (11) comprend une mémoire intermédiaire (38) pour la mémorisation de données d'émission (65) pour des messages de bus avec une plus grande capacité de mémoire (50) que la mémoire de messages (37), dans lequel le dispositif de test (11) comprend un moyen de préparation d'émission (40) pour la lecture des données d'émission (65) de la mémoire intermédiaire (38) et pour une écriture, au préalable à une lecture par l'unité de commande de bus (20), dans la mémoire de messages (37) de l'unité de commande de bus (20) de sorte que la séquence de messages de bus (47) est élargie à des messages de bus supplémentaires (30) que l'unité de commande de bus (20) émet à l'intérieur du cycle d'émission (31, 32) ou de la série de cycles d'émission (33) sur le bus de véhicule automobile (12), **caractérisé en ce que**
le moyen de préparation d'émission (40) comprend un moyen de préparation d'en-tête pour l'écriture de données d'en-tête (54a-54k) dans la mémoire de messages (37) et un moyen de préparation de données utiles pour l'écriture de données utiles (55a-55k) dans la mémoire de messages (37), dans lequel les données d'en-tête (54a-54k) sont prévues pour la génération d'en-têtes de message des messages de bus et les données utiles (55a-55k) sont prévues pour des données utiles (55a-55k) contiguës à chacun des en-têtes de message des messages de bus (30), dans lequel le moyen de préparation d'en-tête écrit les en-têtes de message dans la mémoire de messages (37) avant que le moyen de préparation de données utiles écrive dans la mémoire de messages (37) les données utiles attribuées (55a-55k) de sorte que les moyens de préparation de données utiles peuvent modifier les données utiles (55a-55k) durant une phase d'interdiction (58), dans laquelle l'unité de commande de bus (20) bloque à l'avance une écriture d'en-têtes de message dans la mémoire de messages (37) avant l'émission d'un message de bus concerné (30).

2. Dispositif de test selon la revendication 1, **caractérisé en ce que** la capacité de mémoire (48) de la mémoire de messages (37) est prévue pour un nombre maximal de messages de bus (30) dépendant d'une taille des messages de bus (30).

3. Dispositif de test selon la revendication 1 ou 2, **caractérisé en ce que** le bus est conçu pour un procédé d'accès TDMA (accès multiple par répartition dans le temps), est en particulier un bus FlexRay.

4. Dispositif de test selon l'une quelconque des revendications précédentes, **caractérisé en ce qu'**il comprend pour la réception de données d'émission (65) à écrire dans la mémoire intermédiaire (38) une interface de commande (27) pour un appareil de service (16), en particulier un ordinateur individuel (17).

5. Dispositif de test selon la revendication 4, **caractérisé en ce qu'**il est conçu pour l'émission de messages d'acquittement (63) par le biais de l'interface de commande (27), dans lequel les messages d'acquittement (63) acquittent des messages de bus (30) émis sur le bus de véhicule automobile (12) par l'unité de commande de bus (20).

6. Dispositif de test selon la revendication 5, **caractérisé en ce que** les messages d'acquittement (63) contiennent intégralement ou partiellement le contenu des messages de bus émis (30).

7. Dispositif de test selon l'une quelconque des revendications précédentes, **caractérisé en ce que** l'unité de commande de bus (20) est conçue pour l'écriture de messages de bus (30) d'autres participants sur le bus (19) dans la mémoire de messages (37), qui sont émis à l'intérieur ou à l'extérieur de la séquence de messages de bus (47) par d'autres participants sur le bus (19) entre chacun des messages de bus (30) à émettre par l'unité de commande de bus (20).

8. Dispositif de test selon l'une quelconque des revendications précédentes, **caractérisé en ce qu'**il comprend un moyen de réception (41) qui spécifie à l'unité de commande de bus (20) des instructions de commande (64) pour la réception de messages de bus (30) à des emplacements d'émission prédéterminés (34a-34e, 35f-35k) (slots) du bus de véhicule automobile (12).

9. Dispositif de test selon la revendication 8, **caractérisé en ce que** le moyen de réception (41) est conçu pour l'écriture d'un indicatif de réception (r) pour des emplacements d'émission (34a-34e, 35f-35k) (slots) à l'unité de commande de bus (20) auxquels l'unité de commande de bus (20) doit recevoir des messages de bus (30).

10. Dispositif de test selon la revendication 9, **caractérisé en ce qu'**un emplacement mémoire concerné (56r-56w, 57r-57w) de la mémoire de messages (37) est attribué à un emplacement d'émission (34a-34e, 35f-35k) du bus de véhicule automobile (12) et **en ce que** le moyen de réception (41) est conçu pour le marquage d'emplacements mémoire (56r-56w, 57r-57w) pour chacun des messages de bus à recevoir (30) dans la mémoire de messages (37) avec l'indicatif de réception (r), dans lequel l'unité de commande de bus (20) écrit les messages de bus reçus (30) dans les emplacements mémoire (56r-56w, 57r-57w) pourvus de l'indicatif de réception (r).

11. Dispositif de test selon la revendication 9 ou 10, **caractérisé en ce que** l'unité de commande de bus (20) décrit des emplacements mémoire (56r-56w, 57r-57w) avec un indicatif nul (61) ou avec un indicatif d'information nulle lorsqu'un indicatif de réception (r) est attribué à l'emplacement mémoire (56r-56w, 57r-57w) et que, à l'emplacement d'émission concerné (34a-34e, 35f-35k), l'unité de commande de bus (20) n'a reçu aucun message de bus (30) ou a reçu un message de bus (30) avec une information nulle, et **en ce que** le moyen de réception (41) est conçu pour la fourniture de l'indicatif nul (61) et de l'indicatif d'information nulle à l'interface de commande (27).

12. Dispositif de test selon l'une quelconque des revendications 4 à 11, **caractérisé en ce qu'**il est conçu pour la lecture, dans la mémoire de messages (37), de messages de bus reçus (30) et pour le transfert des messages de bus reçus (30) à la mémoire intermédiaire (38) et/ou à l'interface de commande (27), dans lequel le dispositif de test lit un emplacement mémoire (56r-56w, 57r-57w), contenant un message de bus reçu (30), de la mémoire de messages (37) avant la réécriture par l'unité de commande de bus (20).

13. Dispositif de test selon l'une quelconque des revendications précédentes, **caractérisé en ce que** des messages de bus (30) reçus et à émettre peuvent être mémorisés dans la mémoire de messages (37).

14. Procédé de test destiné au test d'un bus de véhicule automobile (12) avec un dispositif de test (11) qui contient une unité de commande de bus (20) pour l'émission et la réception de messages de bus (30), dans lequel l'unité de commande de bus (20) comprend une mémoire de messages (37) pour la mise à disposition de données d'émission (65) pour plusieurs messages de bus (30), dans lequel la mémoire de messages (37) comprend une capacité de mémoire (48) pour une séquence de messages de bus (47) avec des messages de bus (30) à émettre à l'intérieur d'un seul cycle d'émission (31, 32) ou d'une série de cycles d'émission (33), avec les étapes :
- la lecture de données d'émission (65) pour des messages de bus (30) d'une mémoire intermédiaire (38), qui présente une capacité de mémoire (50) plus grande que la mémoire de messages (37), par le biais d'un moyen de préparation d'émission (40) du dispositif de test (11),
- l'écriture, au préalable à une lecture de l'unité de commande de bus (20), des données d'émission (65) dans la mémoire de messages (37) de l'unité de commande de bus (20) par le biais du moyen de préparation d'émission (40) de sorte que la séquence de messages de bus (47) est élargie à des messages de bus supplémentaires (30) que l'unité de commande de bus (20) émet à l'intérieur du cycle d'émission ou de la série de cycles d'émission (33) sur le bus de véhicule automobile (12), et
- l'émission de messages de bus (30) à l'aide des données d'émission (65) préparées par le moyen de préparation d'émission (40),
**caractérisé par**
- l'écriture de données d'en-tête (54a-54k) dans la mémoire de messages (37) par le biais d'un moyen de préparation d'en-tête du moyen de préparation d'émission (40) et l'écriture de données utiles (55a-55k) dans la mémoire de messages (37) par le biais d'un moyen de préparation de données utiles du moyen de préparation d'émission (40), dans lequel les données d'entête (54a-54k) sont prévues pour la génération d'en-têtes de message des messages de bus et les données utiles (55a-55k) sont prévues pour des données utiles (55a-55k) contiguës à chacun des en-têtes de message des messages de bus (30),
- dans lequel le moyen de préparation d'en-tête écrit les en-têtes de message dans la mémoire de messages (37) avant que le moyen de préparation de données utiles écrive dans la mémoire de messages (37) les données utiles attribuées (55a-55k) de sorte que les moyens de préparation de données utiles peuvent modifier les données utiles (55a-55k) durant une phase d'interdiction (58), dans laquelle l'unité de commande de bus (20) bloque à l'avance une écriture d'en-têtes de message dans la mémoire de messages (37) avant l'émission d'un message de bus concerné (30).
